# EUROPEAN PATENT APPLICATION

(11) **EP 4 641 661 A1**
(43) Date of publication of application: **29.10.2025**
(21) Application number: 23906934.7
(22) Date of filing: 15.12.2023
(51) Int. Cl.: H01M 4/139, H01M 4/62

(54) **NON-AQUEOUS SECONDARY BATTERY ELECTRODE SLURRY, NON-AQUEOUS SECONDARY BATTERY ELECTRODE, AND NON-AQUEOUS SECONDARY BATTERY**

(30) Priority: 20.12.2022 JP 2022202794
(71) Applicant: Resonac Corporation, Tokyo 105-7325 (JP)
(72) Inventor: KAWAHARA, Yuta, Tokyo 105-7325 (JP); IKEHATA, Ryohsuke, Tokyo 105-7325 (JP)
(74) Representative: Berggren Oy
(86) International application number: PCT/JP2023/045123
(87) International publication number: WO 2024/135572

(57) **Abstract**

A non-aqueous secondary battery electrode slurry includes a binder polymer (A), a cellulose derivative (B), an electrode active material (C), and a liquid medium (D), in which the binder polymer (A) has a first structural unit derived from an aromatic ethylenically unsaturated compound (a1) which is a nonionic aromatic compound having one independent ethylenically unsaturated bond; the cellulose derivative (B) has a degree of etherification from 0.50 to 1.2 and a weight average molecular weight from 100,000 to 700,000; and at least a portion of the cellulose derivative (B) is dissolved in the liquid medium (D).

## Description

### Technical field

The present invention relates to a non-aqueous secondary battery electrode slurry, a non-aqueous secondary battery electrode, and a non-aqueous secondary battery.

### Background Art

A non-aqueous secondary battery has a configuration including, for example, a positive electrode with a metal oxide or the like as an active material, a negative electrode with a carbon material such as graphite as an active material, and an electrolyte. A non-aqueous secondary battery is a secondary battery in which ions move between the positive electrode and the negative electrode to charge and discharge the battery.

A representative example of a non-aqueous secondary battery is a lithium ion secondary battery. Non-aqueous secondary batteries are used as power sources for notebook computers, mobile phones, power tools, electronic and communication devices, and the like, due to their compact size and light weight. In addition, from the perspective of promoting environmentally friendly vehicles, they are also employed in electric vehicles and hybrid vehicles. In this context, there is an increasing demand for non-aqueous secondary batteries that offer higher output, greater capacity, and extended service life.

A configuration in which an electrode active material layer is formed on or above a metal current collector is widely used as an electrode for non-aqueous secondary batteries. For example, metal foils such as aluminum and copper are used as current collectors. The electrode active material layer contains an electrode active material, a binder, and, if necessary, a conductive assistant. The electrode active material is a material capable of ntercalating and deintercalating ions that serve as charge carriers.

The binder functions both to bind active materials together and to adhere the active materials to the current collector.

In the process of producing electrodes for non-aqueous secondary batteries, for example, a slurry (electrode slurry) in which an electrode binder and an electrode active material are dissolved or dispersed in water is applied to a surface of a current collector and then dried to form an electrode active material layer on the current collector.

For example, Patent Document 1 describes a lithium ion secondary battery electrode slurry obtained using a binder for a lithium ion secondary battery electrode, an electrode active material, and carboxymethyl cellulose. It also describes that the binder for a lithium ion secondary battery electrode is obtained by emulsion polymerization of an ethylenically unsaturated monomer containing styrene, an ethylenically unsaturated carboxylic acid ester, an ethylenically unsaturated carboxylic acid, and an internal crosslinking agent.

Furthermore, Patent Document 2 describes a secondary battery electrode having an electrode layer containing: at least one polymer selected from the group consisting of styrenebutadiene copolymers and copolymers obtained from (meth)acrylic acid esters and vinyl monomers having an acid component; and a specific nonionic surfactant.

### Related Art Documents

### Patent Documents

Patent Document 1: Japanese Patent Application Laid-Open (JP-A) No. 2011-243464
Patent Document 2: Japanese Patent Application Laid-Open (JP-A) No. 2014-239070 Non Patent Documents

Non Patent Document 1: Y.Tezuka and YTshuchiya, Carbohydr.Res.291, 99-108 (1996)

SUMMARY OF INVENTION

The electrode slurry is required to be capable of forming an electrode active material layer with high peel strength with respect to the current collector. In addition, the electrode slurry is required to reduce the resistance of the electrode produced using the electrode slurry, that is, to be capable of producing a battery with low internal resistance.

Furthermore, in the process of applying the electrode slurry to the current collector, a viscosity of the electrode slurry affects a thickness of the electrode active material layer and a surface condition of the electrode active material layer. In order to stabilize these qualities, it is considered to suppress a viscosity change of the electrode slurry with respect to the shear rate.

On the other hand, in order to improve the dispersibility of components in the electrode slurry and to adjust the electrode slurry to a level suitable for coating, components such as thickeners are often added to the electrode slurry. As a result, the electrode slurry is more likely to behave as a non-Newtonian fluid. That is, the electrode slurry tends to have a large viscosity change with respect to the shear rate.

The present disclosure therefore aims to provide an electrode slurry that suppresses viscosity variation with respect to changes in shear rate, enables the formation of an electrode active material layer having high peel strength with respect to a current collector, and allows for the production of a battery having low internal resistance. The present disclosure also aims to provide a non-aqueous secondary battery electrode having an electrode active material layer with high peel strength with respect to a current collector, and a non-aqueous secondary battery having low internal resistance.

### Solution to Problem

The present disclosure includes the following embodiments.
[1] A non-aqueous secondary battery electrode slurry including a binder polymer (A), a cellulose derivative (B), an electrode active material (C), and a liquid medium (D), in which:
   the binder polymer (A) has a first structural unit derived from an aromatic ethylenically unsaturated compound (a1) which is a nonionic aromatic compound having one independent ethylenically unsaturated bond,
   the cellulose derivative (B) has a degree of etherification of from 0.50 to 1.2 and a weight average molecular weight of from 100,000 to 700,000, and
   at least a portion of the cellulose derivative (B) is dissolved in the liquid medium (D).
[2] The non-aqueous secondary battery electrode slurry according to [1], in which a content of the first structural unit in the binder polymer (A) is from 25% by mass to 65% by mass.
[3] The non-aqueous secondary battery electrode slurry according to [1], in which the cellulose derivative (B) includes at least one selected from the group consisting of carboxymethyl cellulose and salts thereof.
[4] The non-aqueous secondary battery electrode slurry according to [1], in which the binder polymer (A) further has a second structural unit derived from a nonionic (meth)acrylic acid ester (a2), and the nonionic (meth)acrylic acid ester (a2) is a nonionic aliphatic compound having one (meth)acryloyl group and has no ethylenically unsaturated bonds other than the (meth)acryloyl group.
[5] The non-aqueous secondary battery electrode slurry according to [4], in which a content of the first structural unit in the binder polymer (A) is from 25% by mass to 65% by mass, and a content of the second structural unit is from 25% by mass to 70% by mass.
[6] The non-aqueous secondary battery electrode slurry according to [4], in which the binder polymer (A) further has a third structural unit derived from an anionic unsaturated compound (a3), and the anionic unsaturated compound (a3) has an anionic functional group and one independent ethylenically unsaturated bond.
[7] The non-aqueous secondary battery electrode slurry according to [6], in which, in the binder polymer (A), a content of the first structural unit is from 25% by mass to 65% by mass, a content of the second structural unit is from 25% by mass to 70% by mass, and a content of the third structural unit is from 0.30% by mass to 15% by mass.
[8] The non-aqueous secondary battery electrode slurry according to [6], in which:
   the binder polymer (A) further includes a fifth structural unit derived from an internal crosslinking agent (a5) and a sixth structural unit derived from a surfactant (a6) having an ethylenically unsaturated bond,
   the internal crosslinking agent (a5) includes a plurality of independent ethylenically unsaturated bonds, and
   the surfactant (a6) having an ethylenically unsaturated bond includes one independent ethylenically unsaturated bond and is a compound that functions as a surfactant.
[9] The non-aqueous secondary battery electrode slurry according to [8], in which:
   a content of the first structural unit in the binder polymer (A) is from 25% by mass to 65% by mass,
   a content of the second structural unit is from 25% by mass to 70% by mass,
   a content of the third structural unit is from 0.30% by mass to 15% by mass,
   a content of the fifth structural unit is from 0.010% by mass to 1.0% by mass, and
   a content of the sixth structural unit is from 0.10% by mass to 5.0% by mass.
[10] The non-aqueous secondary battery electrode slurry according to [4], [6] or [8], in which:
   the binder polymer (A) further includes a fourth structural unit derived from a conjugated diene compound (a4), and
   the conjugated diene compound (a4) is a nonionic aliphatic compound that has one conjugated diene structure and that has no ethylenically unsaturated bonds other than the conjugated diene structure.
[11] The non-aqueous secondary battery electrode slurry according to [10], in which:
   a content of the first structural unit in the binder polymer (A) is from 25% by mass to 65% by mass,
   a content of the fourth structural unit is from 15% by mass to 55% by mass, and
   a total content of the second structural unit and the fourth structural unit is from 25% by mass to 70% by mass.
[12] The non-aqueous secondary battery electrode slurry according to [1], in which:
   a content of the binder polymer (A) with respect to 100 parts by mass of the electrode active material (C) is from 0.50 parts by mass to 6.0 parts by mass,
   a content of the cellulose derivative (B) with respect to 100 parts by mass of the electrode active material (C) is from 0.50 parts by mass to 6.0 parts by mass, and
   a content of the liquid medium (D) with respect to 100 parts by mass of the electrode active material (C) is from 50 parts by mass to 300 parts by mass.
[13] A non-aqueous secondary battery electrode including a current collector and an electrode active material layer formed on or above the current collector, in which:
   the electrode active material layer includes a binder polymer (A), a cellulose derivative (B) and an electrode active material (C),
   the binder polymer (A) includes a first structural unit derived from an aromatic ethylenically unsaturated compound (a1) which is a nonionic aromatic compound having one independent ethylenically unsaturated bond, and
   the cellulose derivative (B) has a degree of etherification of from 0.50 to 1.2 and a weight average molecular weight of from 100,000 to 700,000.
[14] A non-aqueous secondary battery electrode, including the non-aqueous secondary battery electrode according to [13].

### Advantageous Effects of Invention

According to the present disclosure, it is possible to provide an electrode slurry that suppresses viscosity variation with respect to changes in shear rate, enables the formation of an electrode active material layer having high peel strength with respect to a current collector, and allows for the production of a battery having low internal resistance. The present disclosure also provide a non-aqueous secondary battery electrode having an electrode active material layer with high peel strength with respect to a current collector, and a non-aqueous secondary battery having low internal resistance.

### BRIEF DESCRIPTION OF DRAWINGS

FIG. 1 is a graph showing the relationship between shear rate and viscosity for the electrode slurries of an example and a comparative example in the present disclosure.
FIG. 2 is a graph showing the relationship between shear rate and viscosity for the electrode slurries of another example and a comparative example in the present disclosure.

### DESCRIPTION OF EMBODIMENTS

Hereinafter, a non-aqueous secondary battery electrode slurry, a non-aqueous secondary battery electrode, and a non-aqueous secondary battery will be described as embodiments in the present disclosure. Note that the present disclosure is not limited to the embodiments described below. In the following embodiments, the components (including element steps, or the like) are not essential unless otherwise specified. The same applies to the numerical values and their ranges, and do not limit the present disclosure.

The term "(meth)acrylic" is a general term for acrylic and methacrylic, and "(meth)acrylate" is a general term for acrylate and methacrylate.

The term "ethylenically unsaturated bond" refers to an ethylenically unsaturated bond having radical polymerizability, unless otherwise specified.

In a polymer of a compound having an ethylenically unsaturated bond, a structural unit derived from a certain compound having an ethylenically unsaturated bond is defined as a structual unit in which a chemical structure of a portion other than the ethylenically unsaturated bond in the compound is the same as a chemical structure of a portion other than a part corresponding to the ethylenically unsaturated bond in the polymer. For example, a structural unit derived from styrene has the structure -CH₂CH(C₆H₅(phenyl group))- in a polymer.

It is noted that, in the case of a structural unit having an ionic functional group, the structural unit is referred to based on the structure in the polymer, even if ion exchange has been performed after the polymerization process. For example, when sodium acrylate is polymerized and then the corresponding structural unit is converted to -CH₂CH(COOH)- by ion exchange, this structural unit is regarded as a structural unit derived from acrylic acid.

The term "a plurality of independent ethylenically unsaturated bonds" refers to a plurality of ethylenically unsaturated bonds that do not form a conjugated diene with each other. That is, in a case in which two double bonds form one conjugated diene structure, the number of ethylenically unsaturated bonds contained in the conjugated diene structure is considered to be one.

The term "non-volatile content" refers to the components remaining after weighing 1 g of a mixture into an aluminum dish with a diameter of 5 cm and drying it at 105°C for one hour while circulating air in a dryer at 1 atmosphere (1013 hPa). The form of the mixture may include a solution, dispersion, slurry or the like, but is not limited to thereto. The term "non-volatile content concentration" refers to the mass ratio (mass %) of non-volatile content after drying under the above conditions relative to the mass (1 g) of the composition before drying.

In a stepwise numerical range described in the present disclosure, an upper or lower limit value described in one numerical range may be redisposed with the upper or lower limit value of another stepwise numerical range. In addition, in a numerical range described in the present disclosure, the upper or lower limit value of that numerical range may be redisposed with the values i shown in the synthesis examples.

In the present disclosure, each component may include a plurality of types of the corresponding substance. In a case in which multiple types of substances corresponding to each component are present in a composition, unless otherwise specified, the content or amount of each component means the total content or amount of the multiple substances present in the composition.

In the present disclosure, the term "layer" includes not only the case where, when observing the region in which the layer is present, the layer is formed over the entire region, but also the case where the layer is formed only on part of that region.

### <1. Non-aqueous secondary battery electrode slurry>

A non-aqueous secondary battery electrode slurry in the present disclosure contains a binder polymer (A), a cellulose derivative (B), an electrode active material (C), and a liquid medium (D), in which: the binder polymer (A) has a first structural unit derived from an aromatic ethylenically unsaturated compound (a1) which is a nonionic aromatic compound having one independent ethylenically unsaturated bond; the cellulose derivative (B) has a degree of etherification of from 0.50 to 1.2 and a weight average molecular weight of from 100,000 to 700,000; and at least a portion of the cellulose derivative (B) is dissolved in the liquid medium (D).

The components of the binder polymer (A), the cellulose derivative (B), the electrode active material (C), and the liquid medium (D) are described below. The non-aqueous secondary battery electrode slurry may contain other components such as a conductive assistant in addition to these components.

Hereinafter, the non-aqueous secondary battery electrode slurry may also be referred to simply as an electrode slurry. The electrode slurry is preferably used for producing an electrode of a lithium ion secondary battery, and more preferably for producing a negative electrode of a lithium ion secondary battery.

### [1-1. Binder polymer (A)]

The binder polymer (A) has a first structural unit derived from an aromatic ethylenically unsaturated compound (a1). The binder polymer (A) may be a copolymer having other structural units.

Preferably, the other structural units include a second structural unit derived from a nonionic (meth)acrylic acid ester (a2), a third structural unit derived from an anionic unsaturated compound (a3), a fourth structural unit derived from a conjugated diene compound (a4), a fifth structural unit derived from an internal crosslinking agent (a5), and a sixth structural unit derived from a surfactant (a6) having an ethylenically unsaturated bond (hereinafter, sometimes referred to as "polymerizable surfactant (a6)"). Furthermore, the binder polymer (A) may have structural units other than the above structural units.

One embodiment of the binder polymer (A) has a first structural unit, a second structural unit, a third structural unit, a fifth structural unit, and a sixth structural unit. Another embodiment of the binder polymer (A) has a first structural unit, a second structural unit, a third structural unit, a fourth structural unit, a fifth structural unit, and a sixth structural unit. Another embodiment of the binder polymer (A) has a first structural unit, a second structural unit, a third structural unit, and a fourth structural unit. Another embodiment of the binder polymer (A) has a first structural unit, a second structural unit, and a third structural unit. Another embodiment of the binder polymer (A) has a first structural unit and a second structural unit. Another embodiment of the binder polymer (A) has a first structural unit, a second structural unit, and a fourth structural unit. Note that the binder polymer (A) is not limited to the configurations listed here.

Details of (a1) to (a6) mentioned here are explained below. Note that (a1) to (a5) and the polymerizable surfactant (a6) are distinguished in terms of whether or not they have a surface activity function. A surfactant is a compound that can form micelles in water (has a critical micelle concentration).

### [1-1-1. Aromatic ethylenically unsaturated compound (a1)]

In the present disclosure, the aromatic ethylenically unsaturated compound (a1) is a nonionic aromatic compound having one independent ethylenically unsaturated bond. The aromatic ethylenically unsaturated compound (a1) preferably has an aryl group, and more preferably has a phenyl group, but is not limited thereto. The ethylenically unsaturated bond preferably forms a vinyl group, but is not limited thereto. The aromatic ethylenically unsaturated compound (a1) may contain one type of compound singly, or may contain two or more types of compounds.

Examples of the aromatic ethylenically unsaturated compound (a1) include styrene, t-butylstyrene, p-methylstyrene, and benzyl (meth)acrylate. The aromatic ethylenically unsaturated compound (a1) preferably contains an aromatic vinyl compound, more preferably contains at least one compound selected from the group consisting of styrene and styrene derivatives, and even more preferably contains styrene.

### [1-1-2. Nonionic (meth)acrylic acid ester (a2)]

The nonionic (meth)acrylic acid ester (a2) is a nonionic aliphatic compound having one (meth)acryloyl group. The nonionic (meth)acrylic acid ester (a2) does not have any ethylenically unsaturated bonds other than the (meth)acryloyl group. The nonionic (meth)acrylic acid ester (a2) may contain one type of compound singly, or may contain two or more types of compounds.

The nonionic (meth)acrylic acid ester (a2) preferably contains an alkyl (meth)acrylic acid ester. Examples of alkyl (meth)acrylic acid esters include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, and stearyl (meth)acrylate.

The nonionic (meth)acrylic acid ester (a2) may have a structure other than an alkyl group. The nonionic (meth)acrylic acid ester (a2) having a structure other than an alkyl group preferably has at least one selected from the group consisting of a hydroxy group and a cyano group, and more preferably has a hydroxy group. Examples of nonionic (meth)acrylic acid esters (a2) having a hydroxy group include hydroxymethyl (meth)acrylate and hydroxyethyl (meth)acrylate, but are not limited to.

### [1-1-3. Anionic unsaturated compound (a3)]

The anionic unsaturated compound (a3) is a compound having an anionic functional group and one independent ethylenically unsaturated bond. Examples of the anionic functional group include a carboxy group, a sulfo group, and a phosphate group. The anionic functional group may form a salt. The anionic unsaturated compound (a3) preferably includes a compound having at least one selected from the group consisting of a carboxy group, a sulfo group, and salts thereof, and more preferably includes a compound having a carboxy group. The anionic unsaturated compound (a3) is preferably composed of an aliphatic compound, but may also include an aromatic compound.

The anionic unsaturated compound (a3) may include one type of compound singly, or may include two or more types of compounds. The anionic unsaturated compound (a3) may contain two or more kinds of compounds containing different anionic functional groups. The anionic unsaturated compound (a3) may have one anionic functional group or two or more anionic functional groups in one molecule. The anionic unsaturated compound (a3) may contain a compound having one or more kinds of anionic functional groups.

The binder polymer (A) preferably contains at least one selected from the group consisting of a 31st structural unit derived from a first anionic unsaturated compound (a31) having an anionic functional group that does not form a salt, and a 32nd structural unit derived from a second anionic unsaturated compound (a32) in which all of the anionic functional groups form a salt, and more preferably contains at least the 31st structural unit.

The first anionic unsaturated compound (a31) may be an unsaturated monocarboxylic acid such as (meth)acrylic acid or crotonic acid; an unsaturated dicarboxylic acid such as maleic acid, fumaric acid or itaconic acid; a half ester of an unsaturated dicarboxylic acid; or parastyrenesulfonic acid. Among these, the first anionic unsaturated compound (a31) preferably contains at least one selected from the group consisting of (meth)acrylic acid and itaconic acid, and more preferably contains (meth)acrylic acid.

The second anionic unsaturated compound (a32) may be a compound in which all of anionic functional groups of the above-mentioned first anionic unsaturated compound (a31) form a salt. The salt is not particularly limited, and is preferably at least one selected from the group consisting of an alkali metal salt and an ammonium salt, more preferably at least one selected from the group consisting of a sodium salt, a lithium salt, and an ammonium salt, even more preferably a sodium salt or an ammonium salt, and particularly preferably a sodium salt.

### [1-1-4. Conjugated diene compound (a4)]

The conjugated diene compound (a4) is a nonionic aliphatic compound having one conjugated diene structure. The conjugated diene compound (a4) does not have an ethylenically unsaturated bond other than the conjugated diene structure. The conjugated diene compound (a4) may contain one type of compound singly, or may contain two or more types of compounds. The conjugated diene compound (a4) preferably contains a compound having 10 or less carbon atoms, and more preferably contains a compound having 5 or less carbon atoms. The conjugated diene compound (a4) preferably contains a hydrocarbon.

Conjugated diene compounds (a4) include 1,3-butadiene, isoprene, 1,3-pentadiene, 1,3-hexadiene, 1,3-heptadiene, 2,3-dimethylbutadiene, 2-chloro-1,3-butadiene, 3-methyl-1,3-pentadiene, and isoprene (2-methyl-1,3-butadiene), but are not limited to. It is preferable that the conjugated diene compound (a4) contains 1,3-butadiene.

### [1-1-5. Internal crosslinking agent (a5)]

The internal crosslinking agent (a5) has multiple independent ethylenically unsaturated bonds. The internal crosslinking agent (a5) may contain one type of compound singly, or may contain two or more types of compounds. The ethylenically unsaturated bond contained in the internal crosslinking agent (a5) preferably forms a vinyl group bonded to an aryl group or a (meth)acryloyl group, but is not limited thereto. More preferably, the internal crosslinking agent (a5) contains a vinyl group bonded to an aryl group. A number of ethylenically unsaturated bonds contained in the internal crosslinking agent (a5) is preferably from 2 to 4, more preferably from 2 to 3, and even more preferably 2.

The form of the ethylenically unsaturated bond contained in one molecule of the internal crosslinking agent (a5) may be one type singly or may contain two or more types. **In** addition, the internal crosslinking agent (a5) is preferably a nonionic compound.

Examples of the internal crosslinking agent (a5) include divinylbenzene, ethylene glycol di(meth)acrylate, 1,6-hexanediol di(meth)acrylate, and 2-hydroxy-3-acryloyloxypropyl methacrylate, but are not limited to.

### [1-1-6. Polymerizable surfactant (a6)]

The polymerizable surfactant (a6) is a compound that has one independent ethylenically unsaturated bond and that functions as a surfactant. The polymerizable surfactant (a6) is not particularly limited. It is preferably an anionic surfactant, and more preferably contains at least one selected from the group consisting of a sulfonate salt and a sulfate ester salt. The polymerizable surfactant (a6) may contain one type of compound singly, or may contain two or more types of compounds. The polymerizable surfactant (a6) preferably contains at least one of the compounds represented by the following chemical Formulas (1) to (4), and more preferably contains a compound represented by the following chemical Formula (2).

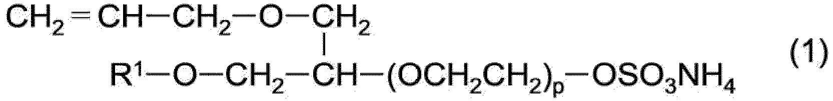

In Formula (1), R¹ is preferably an alkyl group, and p is preferably an integer from 10 to 40. It is more preferable that R¹ has 10 to 40 carbon atoms, and it is even more preferable that R¹ is a linear unsubstituted alkyl group having from 10 to 40 carbon atoms.

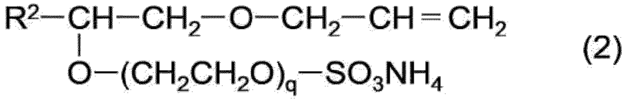

In Formula (2), R² is preferably an alkyl group, and q is preferably an integer from 10 to 12. R² more preferably has 10 to 40 carbon atoms, and R² is even more preferably a linear unsubstituted alkyl group having 10 to 40 carbon atoms.

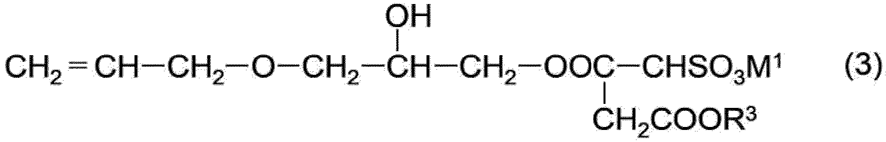

In Formula (3), R³ is preferably an alkyl group, and M¹ is preferably NH₄ or Na. R³ more preferably has 10 to 40 carbon atoms, and R³ is even more preferably a linear unsubstituted alkyl group having 10 to 40 carbon atoms.

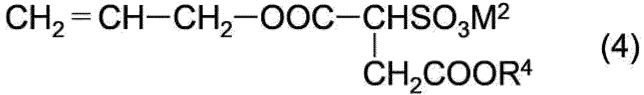

In Formula (4), R⁴ is preferably an alkyl group, and M² is preferably NH₄ or Na. R⁴ mor preferably has 10 to 40 carbon atoms, and R⁴ is even more preferably a linear unsubstituted alkyl group having 10 to 40 carbon atoms.

### [1-1-7. Constitution of binder polymer (A)]

A content of the first structural unit in the binder polymer (A) is preferably 25% by mass or more, more preferably 35% by mass or more, and even more preferably 40% by mass or more.

The content of the first structural unit in the binder polymer (A) is preferably 65% by mass or less, more preferably 55% by mass or less, and even more preferably 50% by mass or less.

In a case in which the binder polymer (A) contains the second structural unit, a content of the second structural unit in the binder polymer (A) is preferably 25% by mass or more, more preferably 35% by mass or more, and even more preferably 40% by mass or more. However, in a case in which the binder polymer (A) contains a fourth structural unit, the content of the second structural unit is not necessarily preferred within the above range.

In a case in which the binder polymer (A) contains the second structural unit, the content of the second structural unit in the binder polymer (A) is preferably 70% by mass or less, more preferably 60% by mass or less, and even more preferably 50% by mass or less. However, in a case in which the binder polymer (A) contains a fourth structural unit, the content of the second structural unit is not necessarily preferred within this range.

In a case in which the binder polymer (A) contains the second structural unit, it is preferable that the content of the first structural unit in the binder polymer (A) is from 25% by mass to 65% by mass, and the content of the second structural unit is from 25% by mass to 70% by mass.

In a case in which the binder polymer (A) contains the second structural unit having a hydroxy group, it is preferable that a content of the second structural unit having a hydroxy group in the binder polymer (A) is 0.50% by mass or more, more preferably 1.0% by mass or more, and even more preferably 1.5% by mass or more.

In a case in which the binder polymer (A) contains the second structural unit having a hydroxy group, it is preferable that the content of the second structural unit having a hydroxy group in the binder polymer (A) is 5.0% by mass or less, more preferably 3.5% by mass or less, and even more preferably 2.5% by mass or less.

In a case in which the binder polymer (A) contains a third structural unit, a content of the third structural unit in the binder polymer (A) is preferably 0.30% by mass or more, more preferably 0.80% by mass or more, and even more preferably 1.30% by mass or more.

In a case in which the binder polymer (A) contains a third structural unit, the content of the third structural unit in the binder polymer (A) is preferably 15% by mass or less, more preferably 10% by mass or less, and even more preferably 8.0% by mass or less.

In a case in which the binder polymer (A) contains a second structural unit and a third structural unit, a content of the first structural unit is preferably from 25% by mass to 65% by mass, a content of the second structural unit is from 25% by mass to 70% by mass, and a content of the third structural unit is preferably from 0.30% by mass to 15% by mass, in the binder polymer (A).

In a case in which the binder polymer (A) contains the 31st structural unit, a content of the 31st structural unit in the binder polymer (A) is preferably 0.20% by mass or more, more preferably 0.50% by mass or more, and even more preferably 0.70% by mass or more.

In a case in which the binder polymer (A) contains the 31st structural unit, a content of the 31st structural unit in the binder polymer (A) is preferably 10% by mass or less, more preferably 8.0% by mass or less, and even more preferably 6.5% by mass or less.

In a case in which the binder polymer (A) contains the 32nd structural unit, a content of the 32nd structural unit in the binder polymer (A) is preferably 0.10% by mass or more, more preferably 0.30% by mass or more, and even more preferably 0.50% by mass or more.

In a case in which the binder polymer (A) contains the 32nd structural unit, a content of the 32nd structural unit in the binder polymer (A) is preferably 3.0% by mass or less, more preferably 2.0% by mass or less, and even more preferably 1.0% by mass or less.

In a case in which the binder polymer (A) contains the 4th structural unit, a content of the 4th structural unit in the binder polymer (A) is preferably 15% by mass or more, more preferably 25% by mass or more, and even more preferably 30% by mass or more.

In a case in which the binder polymer (A) contains the 4th structural unit, a content of the 4th structural unit in the binder polymer (A) is preferably 55% by mass or less, more preferably 45% by mass or less, and even more preferably 35% by mass or less.

In a case in which the binder polymer (A) contains the second structural unit and the fourth structural unit, a total content of the second structural unit and the fourth structural unit in the binder polymer (A) is preferably 25% by mass or more, more preferably 35% by mass or more, and even more preferably 45% by mass or more.

In a case in which the binder polymer (A) contains the second structural unit and the fourth structural unit, the total content of the second structural unit and the fourth structural unit in the binder polymer (A) is preferably 70% by mass or less, more preferably 63% by mass or less, and even more preferably 58% by mass or less.

In a case in which the binder polymer (A) contains the second structural unit and the fourth structural unit, it is preferable that the content of the first structural unit in the binder polymer (A) is from 25% by mass to 65% by mass, the content of the fourth structural unit is from 15% by mass to 55% by mass, and the total content of the second structural unit and the fourth structural unit is from 25% by mass to 70% by mass.

In a case in which the binder polymer (A) contains the fifth structural unit, a content of the fifth structural unit in the binder polymer (A) is preferably 0.010% by mass or more, more preferably 0.030% by mass or more, and even more preferably 0.040% by mass or more.

In a case in which the binder polymer (A) contains a fifth structural unit, the content of the fifth structural unit in the binder polymer (A) is preferably 1.0% by mass or less, more preferably 0.50% by mass or less, and even more preferably 0.10% by mass or less.

In a case in which the binder polymer (A) contains a sixth structural unit, a content of the sixth structural unit in the binder polymer (A) is preferably 0.10% by mass or more, more preferably 0.20% by mass or more, and even more preferably 0.30% by mass or more.

In a case in which the binder polymer (A) contains a sixth structural unit, the content of the sixth structural unit in the binder polymer (A) is preferably 5.0% by mass or less, more preferably 3.0% by mass or less, and even more preferably 2.0% by mass or less.

In a case in which the binder polymer (A) contains the second structural unit, the fifth structural unit and the sixth structural unit, it is preferred that the content of the first structural unit is from 25% by mass to 65% by mass, the content of the second structural unit is from 25% by mass to 70% by mass, the content of the third structural unit is from 0.30% by mass to 15% by mass, the content of the fifth structural unit is from 0.010% by mass to 1.0% by mass, and the content of the sixth structural unit is from 0.10% by mass to 5.0% by mass.

### [1-1-8. Glass transition point of binder polymer (A)]

A glass transition point Tg of binder polymer (A) refers to a peak top temperature of a DDSC chart obtained as a temperature derivative of DSC measured by a Hitachi High-Tech Science Corporation EXSTAR DSC/SS7020 at a heating rate of 10°C/min in a nitrogen gas atmosphere.

The glass transition point Tg of binder polymer (A) is preferably -30°C or higher, more preferably -20°C or higher, and even more preferably -10°C or higher. This is because the cycle characteristics of a non-aqueous secondary battery produced using binder polymer (A) are improved.

The glass transition point Tg of binder polymer (A) is preferably 100°C or lower, more preferably 50°C or lower, and even more preferably 30°C or lower. This is because the adhesion of the electrode active material layer containing the binder polymer (A) to the current collector foil is improved.

### [1-2. Cellulose derivative (B)]

The cellulose derivative (B) has a structure in which at least a portion of the hydrogen atoms of the hydroxyl groups contained in cellulose are substituted, and facilitates the dispersion of the electrode active material (C) in the electrode slurry. In the electrode slurry in the present disclosure, at least a portion of the cellulose derivative (B) is dissolved in the liquid medium (D) described below. It is preferable that the cellulose derivative (B) contained in the electrode slurry in the present disclosure is entirely dissolved in the liquid medium (D), but it may be partially undissolved.

Examples of the cellulose derivative (B) include carboxymethyl cellulose (CMC), hydroxyethyl cellulose, hydroxypropyl cellulose, and a salt of CMC. The cellulose derivative (B) may contain one type of compound singly, or may contain two or more types of compounds. The cellulose derivative (B) preferably contains at least one selected from the group consisting of CMC and a salt of CMC, and more preferably contains a salt of CMC. Examples of the salt of CMC include an alkali metal salt of CMC and an ammonium salt of CMC, and an alkali metal salt of CMC are preferred. As the alkali metal, Na, K or Li is preferred, and Na is more preferred.

A degree of etherification of the cellulose derivative (B) is 0.50 or more, preferably 0.55 or more, and more preferably 0.60 or more. This is to improve the dispersibility of the electrode active material (C) in the electrode slurry.

The degree of etherification of the cellulose derivative (B) is 1.2 or less, preferably 1.0 or less, and more preferably 0.80 or less. This is to reduce the resistance of the electrode formed using the electrode slurry. Also, this is to improve the peel strength of the electrode active material layer formed using the electrode slurry with respect to the current collector.

The degree of etherification of the cellulose derivative (B) refers to a number of etherified portions per structural unit of the three hydroxyl groups contained in one structural unit of cellulose. The degree of etherification is a value measured by ¹³C NMR as described in Non-Patent Document 1. In this case, in order to make it easier to calculate an integral value of the signal, one or both of the etherified substituent and the hydroxyl group may be converted to another substituent as necessary. In a case in which the cellulose derivative (B) is CMC or a salt thereof, the carboxyl group or a salt thereof in the etherified portion is methyl esterified, and the hydroxyl group is propionylated, and then the measurement is performed by ¹³C NMR.

A weight-average molecular weight of the cellulose derivative (B) is 100,000 or more, preferably 200,000 or more, and more preferably 300,000 or more. This is to improve a viscosity of the electrode slurry and obtain excellent coating properties.

The weight-average molecular weight of the cellulose derivative (B) is 700,000 or less, preferably 500,000 or less, and more preferably 400,000 or less. This is to suppress an increase in the viscosity of the electrode slurry when the shear rate is low.

The weight-average molecular weight of the cellulose derivative (B) is a pullulanequivalent value measured by GPC. The specific measurement method is as described later in the Examples.

### [1-3. Electrode active material (C)]

The electrode active material (C) is a material capable of intercalating/deintercalating ions that serve as a charge carrier, such as a lithium ion. The ion that serve as a charge is preferably an alkali metal ion, more preferably a lithium ion, a sodium ion, or a potassium ion, and even more preferably a lithium ion.

In a case in which the electrode is a negative electrode, the electrode active material, i.e., the negative electrode active material, preferably contains at least one of a carbon material, a silicon-containing material, and a titanium-containing material. Examples of the carbon material used as the electrode active material include: a coke such as a petroleum coke, a pitch coke, and a coal coke; a carbonized organic polymer; and a graphite such as an artificial graphite and a natural graphite. Examples of the silicon-containing material include a silicon singly and a silicon compound such as silicon oxide. Examples of the titanium-containing material include lithium titanate. These materials may be used singly, may be used in combination of two or more types, or may be used in a composite form of two or more types.

The negative electrode active material more preferably contains at least one selected from the group consisting of the carbon material and the silicon-containing material, even more preferably contains the carbon material, even more preferably contains a graphite, and particularly preferably contains an artificial graphite. This is because the effect of the binder polymer (A) in enhancing the binding strength between electrode active materials, and between the electrode active material and the current collector, is further increased.

In a case in which the electrode is a positive electrode, the electrode active material, i.e., the positive electrode active material, is a material having a more noble standard electrode potential than the negative electrode active material. Examples of the positive electrode active materials include a lithium composite oxide containing nickel, such as Ni-Co-Mn type lithium composite oxides, Ni-Mn-Al type lithium composite oxides, and Ni-Co-Al type lithium composite oxides, as well as lithium cobalt oxide (LiCoO₂), spinel-type lithium manganese oxide (LiMn₂O₄), olivine-type lithium iron phosphate, a chalcogen compound shch as TiS₂, MnO₂, MoO₃ and V₂O₅. As the positive electrode active material, one of these materials may be used singly, or two or more may be used in combination.

### [1-4. Liquid medium (D)

The liquid medium (D) is a medium that maintains a liquid state at 1 atmosphere (1013 hPa) in a range of from 15°C to 30°C and that has a boiling point of 250°C or less at 1 atmosphere. The liquid medium (D) can dissolve at least a part of an amount of cellulose derivative (B) contained in the electrode slurry described below. This is because it increases a viscosity of the electrode slurry to a level that ensures good coatability.

The liquid medium (D) is preferably water, a hydrophilic solvent, or a combination of these. Examples of the hydrophilic solvent include methanol, ethanol, isopropyl alcohol, and N-methylpyrrolidone. It is more preferable that the liquid medium (D) contains water, and even more preferably contains 95% or more by mass of water.

### [1-5. Content of each component in electrode slurry]

In the electrode slurry, a content of the binder polymer (A) with respect to 100 parts by mass of the electrode active material (C) is preferably 0.50 parts by mass or more, more preferably 1.0 parts by mass or more, and even more preferably 1.5 parts by mass or more. This is to ensure sufficient binding between the electrode active materials (C) and between the electrode active material (C) and the current collector.

In the electrode slurry, the content of the binder polymer (A) with respect to 100 parts by mass of the electrode active material (C) is preferably 6.0 parts by mass or less, more preferably 4.0 parts by mass or less, and even more preferably 3.0 parts by mass or less. This is because it increases a content of the electrode active material (C) in the electrode active material layer formed using the electrode slurry, thereby improving the capacity of the electrode.

In the electrode slurry, a content of the cellulose derivative (B) with respect to 100 parts by mass of the electrode active material (C) is preferably 0.50 parts by mass or more, more preferably 1.0 parts by mass or more, and even more preferably 1.5 parts by mass or more. This is because it facilitates the dispersion of the electrode active material (C) in the electrode slurry.

In the electrode slurry, the content of the cellulose derivative (B) with respect to 100 parts by mass of the electrode active material (C) is preferably 6.0 parts by mass or less, more preferably 4.0 parts by mass or less, and even more preferably 3.0 parts by mass or less. This is because it prevents the viscosity of the electrode slurry from increasing more than necessary. Also, this is because it increases the content of the electrode active material (C) in the electrode active material layer formed using the electrode slurry, thereby improving the capacity of the electrode.

In the electrode slurry, a content of the liquid medium (D) with respect to 100 parts by mass of the electrode active material (C) is preferably 50 parts by mass or more, more preferably 75 parts by mass or more, and even more preferably 100 parts by mass or more. This is because it facilitates the dispersion of the electrode active material (C) in the electrode slurry and it improves the coatability of the electrode slurry.

In the electrode slurry, the content of the liquid medium (D) with respect to 100 parts by mass of the electrode active material (C) is preferably 300 parts by mass or less, more preferably 200 parts by mass or less, and even more preferably 150 parts by mass or less. This is because it increases the viscosity of the electrode slurry to a level that ensures good coatability, and shortens the drying time after coating the electrode slurry.

In the electrode slurry, the content of the binder polymer (A) with respect to 100 parts by mass of the electrode active material (C) is preferably from 0.50 parts by mass to 6.0 parts by mass, the content of the cellulose derivative (B) with respect to 100 parts by mass of the electrode active material (C) is preferably from 0.50 parts by mass to 6.0 parts by mass, and the content of the liquid medium (D) with respect to 100 parts by mass of the electrode active material (C) is preferably from 50 parts by mass to 300 parts by mass.

### [1-6. Non-volatile content concentration of electrode slurry]

A non-volatile content concentration of the electrode slurry is preferably 30% by mass or more, more preferably 40% by mass or more, and even more preferably 50% by mass or more. This is because the concentration of the active components in the electrode slurry increases, allowing a sufficient amount of electrode active material layer to be formed with a small amount of electrode slurry. It is also because the viscosity of the electrode slurry is increased to a level that ensures good coatability, and the drying time after coating the electrode slurry is shortened.

The non-volatile content concentration of the electrode slurry is preferably 80% by mass or less, more preferably 70% by mass or less, and even more preferably 60% by mass or less. This is because it facilitates the dispersion of the electrode active material (C) in the electrode slurry and it improves the coatability of the electrode slurry.

### <2. Method of producing non-aqueous secondary battery electrode slurry>

Hereinafter, an example of a method of producing an electrode slurry in the present disclosure will be described, but a method of producing an electrode slurry is not limited this example.

### [2-1. Synthesis of binder polymer (A)]

The binder polymer (A) is obtained by polymerizing a compound having an ethylenically unsaturated bond as a monomer (a). The monomer (a) includes an aromatic ethylenically unsaturated compound (a1), and other ethylenically unsaturated compounds are also copolymerized as necessary. Examples of other ethylenically unsaturated compounds include the above-mentioned compounds (a2) to (a6), but are not limited to.

As a polymerization method, for example, emulsion polymerization of the monomer (a) in an aqueous medium may be employed. Examples of other components used in the synthesis of the binder polymer (A) by emulsion polymerization include, but are not limited to, a non-polymerizable surfactant, a basic substance, a radical polymerization initiator or the like, and chain transfer agents or the like may also be used. Hereinafter, the above-mentioned components required or optionally usable for the synthesis of the binder polymer (A), as well as the emulsion polymerization method, will be described. However, a description of the monomer (a) will be omitted below, since it has already been described above.

### [2-1-1. Aqueous medium]

The aqueous medium used in the emulsion polymerization is water, a hydrophilic solvent, or a mixture of these. Examples of the hydrophilic solvent include methanol, ethanol, isopropyl alcohol, and N-methylpyrrolidone. From the viewpoint of polymerization stability, the aqueous medium is preferably water. As long as the polymerization stability is not impaired, an aqueous medium in which a hydrophilic solvent is added to water may be used.

### [2-1-2. Surfactant]

In the emulsion polymerization of the monomer (a), non-polymerizable surfactant can improve the dispersion stability of at least one of a dispersion liquid (emulsion) during and after polymerization. As such a surfactant, it is preferable to use an anionic surfactant or a nonionic surfactant.

Examples of the anionic surfactant include an alkylbenzenesulfonate, an alkyl sulfate, a polyoxyethylene alkyl ether sulfate, and a fatty acid salt.

Examples of the nonionic surfactant include a polyoxyethylene alkyl ether, a polyoxyethylene alkyl phenyl ether, a polyoxyethylene polycyclic phenyl ether, a polyoxyalkylene alkyl ether, a sorbitan fatty acid ester, and a polyoxyethylene sorbitan fatty acid ester.

The surfactant may be used singly or in combination of two or more.

### [2-1-3. Basic substance]

By adding a basic substance, the acidic components present in the monomer (a) can be neutralized, thereby enabling pH adjustment. This pH adjustment contributes to improved mechanical and chemical stability of the dispersion, at least one of during or after the emulsion polymerization process.

The pH of the dispersion may be appropriately adjusted depending on the specifications of the electrodes, the conditions employed in slurry preparation process as described below, and the like. The pH of the dispersion is not limited, and is preferably 1.5 or more, more preferably 5.0 or more, and even more preferably 6.0 or more at 23° C. The pH of the dispersion is not limited, and is preferably 10 or less, and more preferably 9.0 or less. This is to suppress the sedimentation of the electrode active material (C) within the electrode slurry when the electrode active material is added.

Examples of the basic substance include ammonia, triethylamine, sodium hydroxide, lithium hydroxide. The basic substance may be used singly or in combination of two or more.

### [2-1-4. Radical polymerization initiator]

The radical polymerization initiator used in emulsion polymerization is not particularly limited, and examples thereof include a persulfate such as ammonium persulfate and potassium persulfate; hydrogen peroxide; an azo compound; and an organic peroxide such as t-butyl hydroperoxide, t-butyl peroxybenzoate, and cumene hydroperoxide. Among these, a persulfate and an organic peroxide are preferred. Redox polymerization may be employed during emulsion polymerization process by using a combination of the radical polymerization initiator and a reducing agent such as sodium bisulfite, Rongalite, or ascorbic acid.

An amount of the radical polymerization initiator added is preferably 0.10 parts by mass or more, and more preferably 0.20 parts by mass or more, with respect to 100 parts by mass of monomer (a). This is because it allows for a higher conversion rate of the polymerization of the monomer (a). The amount of the radical polymerization initiator added is preferably 3.0 parts by mass or less, more preferably 2.0 parts by mass or less, with respect to 100 parts by mass of the monomer (a). This is because it enables an increase in the molecular weight of the binder polymer (A), thereby reducing the swelling ratio of the electrode active material layer produced using the electrode slurry with respect to the electrolyte can be reduced.

### [2-1-5. Emulsion polymerization method]

Examples of the emulsion polymerization method include a method in which emulsion polymerization is performed while continuously supplying each component used in the emulsion polymerization. A temperature of the emulsion polymerization is not particularly limited, and is preferably 30°C or more, more preferably 50°C or more, and even more preferably 55°C or more. The temperature of the emulsion polymerization is not particularly limited, and is preferably 90°C or less, more preferably 85°C or less, and even more preferably 80°C or less. It is preferable to carry out the emulsion polymerization while stirring. It is also preferable to continuously supply the monomer (a) and the radical polymerization initiator into the reaction vessel. This is because the radical polymerization initiator is more uniformly distributed in the reaction liquid.

### [2-2. Mixing of components (production of electrode slurry)]

A method of mixing the components are not particularly limited, and examples thereof include a method in which the dispersion of the binder polymer (A) obtained by the above process (hereinafter sometimes referred to as the binder composition) is mixed with the cellulose derivative (B), the electrode active material (C), and, if necessary, the liquid medium (D) (the aqueous medium used in the aforementioned polymerization may be used directly as the liquid medium (D)), and, along with any other optional components. The order of addition of the components is also not particularly limited and may be determined appropriately. Examples of the mixing method include the use of mixing device such as a stirrer, a rotator, or a shaker.

### [2-3. Viscosity of electrode slurry]

In the electrode slurry in the present disclosure, a ratio (η₁₀₀/η_{0.10}) of the viscosity η₁₀₀ at a shear rate of 100 s⁻¹ to the viscosity n_{0.10} at a shear rate of 0.10 s⁻¹ is preferably 0.30 or more, more preferably 0.40 or more, and even more preferably 0.50 or more. The ratio (η₁₀₀/η_{0.10}) is preferably 0.90 or less, more preferably 0.80 or less, and even more preferably 0.70 or less.

The viscosity of the electrode slurry in a case in which the shear rate is changed is measured using a viscosity/viscoelasticity measuring device (for example, RS6000, manufactured by HAAKE Co., Ltd.) and a cone plate at a measurement temperature of 25°C, while increasing the shear rate of from 0.010 s⁻¹ to 1000 s⁻¹ at a rate of 27% per minute. A cone plate with a diameter of 35 mm and an angle of 2° is used.

### <3. Non-aqueous secondary battery electrode>

The non-aqueous secondary battery electrode (hereinafter sometimes referred to as "electrode") in the present disclosure includes a current collector and an electrode active material layer formed on or above the current collector. Examples of a shape of the electrode are not particularly limited, and include a layered body and a wound body. An area in which the electrode active material layer is formed on or above the current collector is not particularly limited, and the electrode active material layer may be formed on or above the entire surface of the current collector, or on a part of the surface of the current collector. In a case in which the current collector is in a shape of a plate, foil or the like, the electrode active material layer may be formed on or above both surfaces of the current collector, or on or above only one surface.

### [3-1. Current collector]

The current collector is preferably a metal sheet having a thickness of from 0.001 mm to 0.5 mm, and examples of the metal include iron, copper, aluminum, nickel, and stainless steel. In a case in which the non-aqueous secondary battery electrode is the negative electrode of a lithium ion secondary battery, the current collector is preferably a copper foil.

### [3-2. Electrode active material layer]

The electrode active material layer in the present disclosure includes a binder polymer (A), a cellulose derivative (B) and an electrode active material (C). The components listed here are as described above. The electrode active material layer may include other components such as a conductive assistant.

### [3-3. Method of producing electrode]

Examples of a method of producing an electrode include a method by applying an electrode slurry on or above a current collector, drying it to form an electrode active material layer, and then cutting it into an appropriate size.

The method of applying the electrode slurry on or above the current collector is not particularly limited, and examples thereof include a reverse roll method, a direct roll method, a doctor blade method, a knife method, an extrusion method, a curtain method, a gravure method, a bar method, a dip method, and a squeeze method. Among these, in consideration of the various physical properties such as the viscosity of the electrode slurry and the drying property, it is preferable to use the doctor blade method, the knife method, or the extrusion method. This is because an electrode active material layer with a smooth surface and small variation in thickness can be obtained.

The electrode slurry may be applied to only one side of the current collector, or to both sides. When applying the electrode slurry to both sides of the current collector, it may be applied to each side sequentially, or both sides may be applied at once. The electrode slurry may be applied to the current collector continuously or intermittently. An amount of electrode slurry applied can be appropriately determined depending on the design capacity of the battery, the composition of the electrode slurry, and the like. Although the optimal amount may vary depending on the properties of the electrode slurry, the amount applied is preferably 15 mg/cm² or less (per side, in a case in which it is applied to both sides). This is because it is possible to suppress the occurrence of cracks on the electrode surface during the drying process of the electrode slurry.

The electrode active material layer is formed on or above the current collector by drying the electrode slurry applied on or above the current collector. The method of drying the electrode slurry is not particularly limited, and examples thereof include the use of hot air, reduced pressure or vacuum environment, (far) infrared rays, and low temperature air, or combination thereof. A drying temperature and drying time of the electrode slurry can be appropriately adjusted depending on factors such as the concentration of non-volatile components in the electrode slurry, an coating amount on or above the current collector, or the like. A drying temperature is preferably from 40°C to 350°C, and more preferably from 60°C to 100°C from the viewpoint of productivity. A drying time is preferably from 1 minute to 30 minutes.

The electrode sheet in which the electrode active material layer is formed on or above the current collector may be cut to a size and shape appropriate for an electrode. A method of cutting the electrode sheet is not particularly limited, and examples thereof include the use of slitting, laser, wire cutting, cutter, Thomson, or the like.

Before or after cutting the electrode sheet, the electrode sheet may be pressed as necessary. Pressing makes the electrode active material more firmly bonded to the current collector, and further makes the electrode thinner, which allows the non-aqueous battery to be made smaller. As the pressing method, a general method can be used, and in particular, die pressing or roll pressing is preferably used. In a case in which the die pressing is used, a pressing pressure is not particularly limited, and is preferably from 0.5 t/cm² to 5 t/cm². In a case in which the roll pressing is used, a linear pressure is not particularly limited, and is preferably from 0.5 t/cm to 5 t/cm or less. This is to suppress the decrease in the insertion and desorption capacity of charge carriers such as lithium ions into the electrode active material while obtaining the above-mentioned effects of pressing.

### [3-4. Peel strength of electrode]

A peel strength of the negative electrode active material layer with respect to the current collector is preferably 15 mN/mm or more, more preferably 18 mN/mm or more, and even more preferably 20 mN/mm or more.

A higher peel strength of the negative electrode active material layer with respect to the current collector is preferable. There is no particular upper limit, and it may be 25 mN/mm or less.

The peel strength of the negative electrode active material layer with respect to the current collector is measured by the method described in the Examples.

### [3-5. Electrode resistance]

A resistance of the negative electrode active material layer is preferably 350 mΩ·cm² or less, more preferably 300 mΩ·cm² or less, even more preferably 255 mΩ·cm² or less, and particularly preferably 235 mΩ·cm² or less. The lower resistance of the negative electrode active material layer is preferable. There is no particular lower limit, and it may be 150 mΩ·cm² or more.

An interfacial resistance between the negative electrode active material layer and the current collector is preferably 100 mΩ·cm² or less, more preferably 88 mΩ·cm² or less, and even more preferably 73 mΩ·cm² or less. The lower interfacial resistance between the negative electrode active material layer and the current collector is preferable. The lower limit is not particularly limited, and it may be 30 mΩ·cm² or more.

The resistance of the negative electrode active material layer and the interfacial resistance between the negative electrode active material layer and the current collector are measured using an electrode resistance measuring device (for example, electrode resistance measuring system XF057 manufactured by Hioki E.E. Corporation).

### <4. Non-aqueous secondary battery>

A non-aqueous secondary battery in the present disclosure includes the non-aqueous secondary battery electrode in the present disclosure.

As a preferred example of the non-aqueous secondary battery in the present disclosure, a lithium ion secondary battery will be described, but the configuration of the battery is not limited to that described here. The non-aqueous secondary battery in the present disclosure has a positive electrode, a negative electrode, an electrolyte, and, if necessary, components such as a separator, all of which are housed in an exterior body, and the above-mentioned electrodes are used for one or both of the positive electrode and the negative electrode. In the non-aqueous secondary battery in the present disclosure, at least one of the positive electrode and the negative electrode contains the binder polymer (A), and it is preferable that at least the negative electrode contains the binder polymer (A).

### [4-1. Electrolyte]

As the electrolyte, a non-aqueous liquid having ion conductivity is used. Examples of the electrolyte include a solution in which an electrolyte is dissolved in an organic solvent and an ionic liquid, and the former is preferable. This is because a non-aqueous battery with low producing costs and low internal resistance can be obtained.

As the electrolyte, an alkali metal salt can be used, and it can be selected appropriately depending on the type of electrode active material, or the like. Examples of the electrolyte include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, and a lithium aliphatic carboxylate. Other alkali metal salts can also be used as electrolytes.

The organic solvent for dissolving the electrolyte is not particularly limited, and examples thereof include a carbonate ester compound such as ethylene carbonate (EC), propylene carbonate (PC), diethyl carbonate (DEC), methyl ethyl carbonate (MEC), dimethyl carbonate (DMC), fluoroethylene carbonate (FEC), and vinylene carbonate (VC); a nitrile compound such as acetonitrile; and a carboxylate ester such as ethyl acetate, propyl acetate, methyl propionate, ethyl propionate, and propyl propionate. These organic solvents may be used singly or in combination of two or more. Among them, it is preferable to use a combination of linear carbonate solvents as the organic solvent. Examples of the linear carbonate solvent include diethyl carbonate, dimethyl carbonate, and ethyl methyl carbonate.

### [4-2. Exterior body]

As the exterior body, a laminate material of an aluminum foil and a resin film can be appropriately used, but is not limited thereto. A shape of the battery is not particularly limited, and examples thereof include a coin type, a button type, a sheet type, a cylindrical type, a square type, and a flat type.

### EXAMPLE

The present embodiment will be described in more detail below using examples, but the present embodiment is not limited to the examples described below. In the following examples, a negative electrode slurry of a lithium ion battery is prepared as an example of an electrode slurry. Note that the water used in the following examples and comparative examples is ion-exchanged water unless otherwise specified.

### <1. Binder polymer (A)>

### [1-1. Synthesis example 1]

A monomer (a) of the type and amount shown in Synthetic Example 1 of Table 1 was mixed with 200 parts by mass of water and emulsified to prepare a monomer emulsion. Aqualon KH10, used as the polymerizable surfactant (a6), is polyoxyethylene-1-(allyloxymethyl) alkyl ether sulfate ester ammonium salt manufactured by Daiichi Kogyo Seiyaku Co., Ltd., and is a compound represented by the above Formula (2).

Then, polymerization initiators of the type and amount shown in Synthesis Example 1 of Table 1 were each dissolved in 50 parts by mass of water to prepare an aqueous polymerization initiator solution.

**[Table 1]**

| | Component | | Compound | Synthesis Example 1 (Binder polymer (A1)) | | Synthesis Example 2 (Binder polymer (A2)) | |
|---|---|---|---|---|---|---|---|
| | | | | Parts by mass | % by mass (*1) | Parts by mass | % by mass (*1) |
| Synthesis of Binder polymer (A) | Monomer(a) | (a1) | Styrene | 190 | 48.1 | 167 | 42.4 |
| | | (a2) | 2-Ethylhexyl acrylate | 170 | 43.1 | 84 | 21.5 |
| | | | 2-Hydroxyethyl methacrylate | 7.5 | 1.9 | 0 | 0 |
| | | (a31) | Acrylic acid | 15 | 3.8 | 0 | 0 |
| | | | Itaconic acid | 8.0 | 2.0 | 3.8 | 0.97 |
| | | (a32) | P-styrenesulfonic acid | 2.5 | 0.63 | 2.5 | 0.64 |
| | | (a4) | 1,3-Butadiene | 0 | 0 | 129 | 32.8 |
| | | (a5) | Divinylbenzene | 0.20 | 0.051 | 0.20 | 0.051 |
| | | (a6) | Aqualon KH10 | 1.7 | 0.43 | 6.5 | 1.6 |
| | Radical polymerization initiator | | Potassium persulfate | 1.0 | - | 3.8 | - |
| | | | Rongalite SFS | 0.60 | - | 0.0 | - |
| | Basic substance | | Ammonia | 17 | - | 5.3 | - |
| | Aqueous medium | | Water | 580 | - | 591 | - |
| Evaluation of binder polymer (A) | | | Non-volatile content concentration | 40 | | 40 | |
| | | | Glass transition point (°C) | 15 | | -2 | |

| | | | | | | | |
|---|---|---|---|---|---|---|---|
| * The mass% values indicate a proportion of each monomer used with respect to a total amount of monomer (a). | | | | | | | |

A separable flask equipped with a condenser, thermometer, stirrer, and dropping funnel was charged with 150 parts by mass of water and heated to 75°C. Into this flask, the above-prepared monomer emulsion and an aqueous solution of a polymerization initiator were continuously added over a period of 3 hours while stirring at 75°C, thereby conducting emulsion polymerization to obtain an emulsion. The resulting emulsion was cooled to room temperature (25°C). After cooling, 17 parts by mass of 25 mass% aqueous ammonia solution (including 4.25 parts by mass of ammonia and 12.75 parts by mass of water, as the basic substance shown in Table 1) and 130 parts by mass of water were added to the emulsion. Rongalit SFS used as the polymerization initiator was manufactured by Sumitomo Seika Chemicals Co., Ltd.

By this process, a binder composition of Synthesis Example 1 was obtained as an emulsion containing the binder polymer (A1).

### [1-2. Synthesis Example 2]

A monomer (a) of the type and amount of shown in Synthesis Example 2 of Table 1 was mixed with 200 parts by mass of water and emulsified to prepare a monomer emulsion.

Then, a radical polymerization initiators of the type and amount shown in Synthesis Example 2 of Table 1 was dissolved in 50 parts by mass of water to prepare an aqueous polymerization initiator solution.

A 5 MPa pressure vessel equipped with a stirrer was charged with 200 parts by mass of water, and heated to 60°C at a pressure of 1.0 MPa inside the vessel. Into this pressure vessel, the above-prepared monomer emulsion and an aqueous solution in which a the above radical polymerization initiator was dissolved were each added in a single batch. Emulsion polymerization was then carried out by stirring at 60°C for 8 hours, thereby obtaining an emulsion. The obtained emulsion was cooled to room temperature (25°C). To the cooled emulsion, 5.3 parts by mass of 25 mass% ammonia water (including 1.325 parts by mass of ammonia, and 3.975 parts by mass of water, as the basic substance shown in Table 1) and 130 parts by mass of water were added.

By this process, an emulsion including dispersed particles containing the binder polymer of Synthesis Example 2 and an aqueous medium was obtained, as an emulsion containing binder polymer (A2).

### [1-3. Measurement of non-volatile content concentration]

One gram of each of the emulsions obtained in Synthesis Examples 1 and Synthesis Example 2 was weighed out in an aluminum dish having a diameter of 5 cm, and dried at 105°C for 1 hour at 1 atmosphere (1013 hPa) while circulating air in a dryer, and a mass of the remaining components was measured to determine the non-volatile content concentration (% by mass). The measured values of the non-volatile content concentration of the emulsions obtained in Synthesis Example 1 and Synthesis Example 2 are shown in Table 1.

### [1-4. Measurement of glass transition point]

Each of the emulsions obtained in Synthesis Example 1 and Synthesis Example 2 was dried at 105°C for 1 hour while circulating air in a dryer at 1 atmosphere (1013 hPa), and the remaining components were taken out and packed into a sample pan for DSC measurement. DSC measurement was performed using an EXSTAR DSC/SS7020 manufactured by Hitachi High-Tech Science Corporation at a heating rate of 10°C/min in a nitrogen gas atmosphere. For each synthesis examples, a peak top temperature of the DDSC chart obtained as the temperature derivative of DSC was taken as the glass transition point (°C) of the binder polymer (A1) or binder polymer (A2). The measured values of the glass transition points of the binder polymer (A1) and binder polymer (A2) are shown in Table 1.

### <2. Negative electrode slurry>

### [2-1. Preparation of negative electrode slurry]

In each of examples and comparative examples, the binder polymer (A), cellulose derivative (B), and electrode active material (C) (negative electrode active material) were used as shown in Table 2, and mixed with water as liquid medium (D) in the amounts shown in Table 2 to prepare a negative electrode slurry. The amount of water added in this process was adjusted so that a total amount, including the water contained in the emulsion, was the amount shown in Table 2.

For the binder polymer (A), the binder polymer (A1) synthesized in Synthesis Example 1 and the binder polymer (A2) synthesized in Synthesis Example 2 were used.

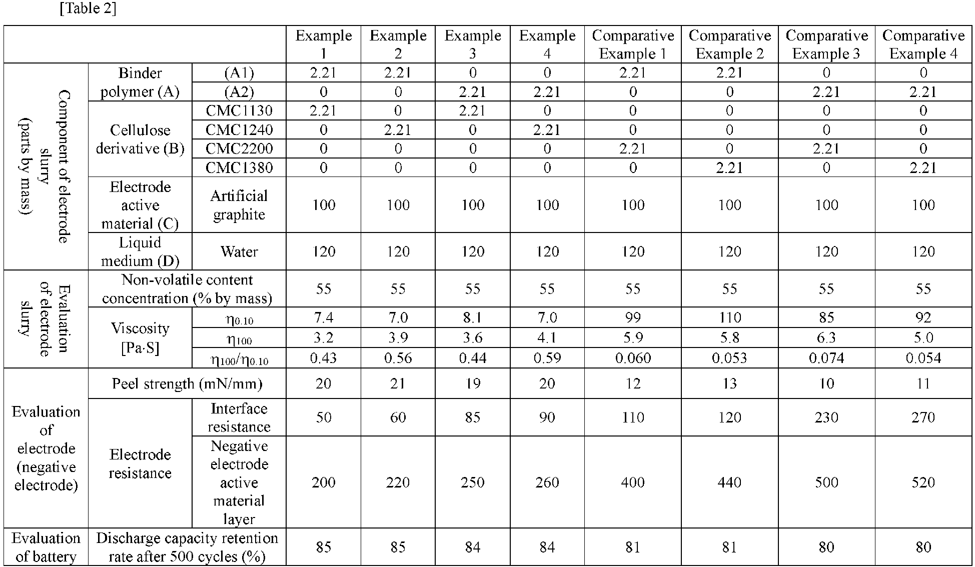

As the cellulose derivative (B), the following carboxymethylcellulose sodium salt (CMC-Na) was used.
CMC1130: manufactured by Daicel Corporation, degree of etherification 0.70, weight average molecular weight 300,000
CMC1240: manufactured by Daicel Corporation, degree of etherification 0.90, weight average molecular weight 380,000
CMC2200: manufactured by Daicel Corporation, degree of etherification 0.90, weight average molecular weight 1,000,000
CMC1380: manufactured by Daicel Corporation, degree of etherification 1.3, weight average molecular weight 1,110,000

The degree of etherification of CMC-Na is a value measured by the method described in Non-Patent Document 1, and a sample used for the measurement is obtained by the method described below.

A 300 mL round-bottom flask was charged with 5.0 g of CMC-Na, 100 mL of Me₂SO (dimethyl sulfoxide), and 20.0 mL of dimethyl sulfate. The mixture was then heated at 45°C for 24 hours. The resulting mixture is then poured into methanol containing 0.1 vol% HCl to separate the reaction product, which is then vacuum-dried. This process yields methyl-esterified CMC (MCMC).

In a 100 mL round-bottom flask, 1.0 g of the obtained MCMC, 5.0 mL of propionic anhydride, 50 mL of pyridine, and 0.20 g of 4-(dimethylamino)pyridine were dissolved in 50 mL of dimethylacetamide containing 6 mass% LiCl. This mixture was heated at 100°C for 6 hours. The mixture is then poured into 2 L of water to separate the product, which is then vacuum-dried. This process yields propionylated MCMC (PMCMC).

¹³C NMR measurements were performed on the obtained PMCMC under the following conditions.
Solvent: dimethylsulfoxide-d6
Solution temperature: 100°C
Measuring device: JNM-EX400 (100MHz) manufactured by JEOL Ltd.
Probe: 5mm diameter C-H dual probe
Measurement mode: Quantitative mode
Measurement technique: non-NOE gated decoupling technique
Repetition time (pulse repetition n time): 30 seconds
Number of times of accumulation: 2000

Based on the data obtained by the ¹³C NMR measurement, a ratio I₁/I₂ was determined, where the integrated value I₁ is a sum of three peak intensities corresponding to the C=O of the propionyl group appearing at 175.7 ppm, 176.2 ppm and 176.7 ppm, and the integrated value I₂ is a sum of two peak intensities appearing at 103.0 ppm and 104.5 ppm. The ratio I₁/I₂ is a number of unsubstituted hydroxyl groups per structural unit in the cellulose derivative. Therefore, the value of (3 - I₁/I₂) represents the number of hydroxyl groups substituted (i.e., converted into ether linkages) per structural unit, and this value corresponds to the degree of etherification.

A weight average molecular weight of CMC-Na is a pullulan equivalent value measured by GPC, and the measurement was performed using the following equipment and conditions.

GPC equipment: GPC-101 (manufactured by Resonac Corporation)
Solvent: 0.1M NaNO₃ aqueous solution
Sample column: Shodex Column Ohpak SB-806 HQ (8.0mm I.D. × 300mm) × 2
Reference column: Shodex Column Ohpak SB-800 RL (8.0mm I.D. × 300mm) × 2
Column temperature: 40°C
Sample concentration: 0.1% by mass
Detector: RI-71S (Shimadzu Corporation)
Flow rate: 1 ml/min
Molecular weight standard: Pullulan (P-5, P-10, P-20, P-50, P-100, P-200, P-400, P-800, P-1300, P-2500 (Resonac Corporation))

As the electrode active material (C), artificial graphite (G49, Jiangxi Zishen Technology Co., Ltd.) was used in all examples and comparative examples.

### [2-2. Various measurements of negative electrode slurry]

### [2-2-1. Non-volatile content of negative electrode slurry]

In each of the examples and comparative examples, 1 g of the respective negative electrode slurry was weighed into an aluminum dish with a diameter of 5 cm. The mixture was dried at 130°C for 1 hour under 1 atmospheric pressure (1013 hPa) in a drying oven while circulating air. A mass of the residue remaining after drying was measured to determine the non-volatile content (% by mass). The non-volatile content of the electrode slurries prepared in each of the examples and comparative examples is shown in Table 2.

### [2-2-2. Viscosity of negative electrode slurry]

A viscosity of the slurry was measured at 25°C using a HAAKE RS6000 viscosity and viscoelasticity measuring device and a cone plate. The cone plate had a diameter of 35 mm and an angle of 2°, and the viscosity was measured while increasing the shear rate of from 0.010 s⁻¹ to 1000 s⁻¹ at a rate of 27% per minute (i.e., the shear rate increases exponentially over time).

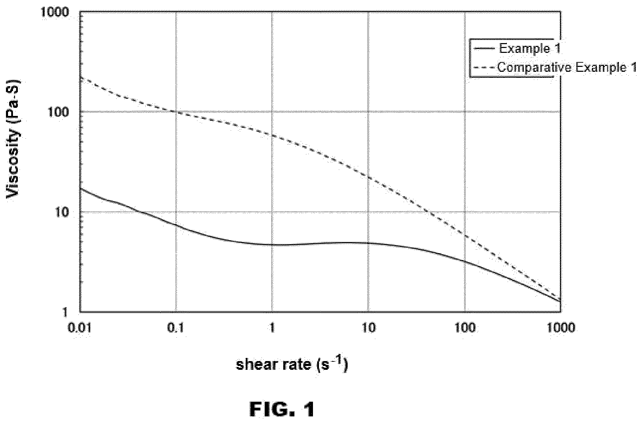

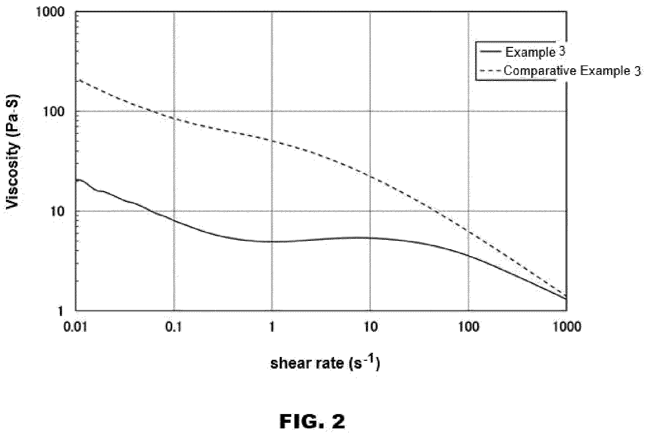

As an example of the measurement results, FIG. 1 shows the relationship between shear rate and viscosity for the electrode slurries of Example 1 and Comparative Example 1. FIG. 2 shows the relationship between shear rate and viscosity for the electrode slurries of Example 3 and Comparative Example 3. It can be seen that the electrode slurry of Example 1 exhibits more stable viscosity than that of Comparative Example 1, even as the shear rate changes. It can also be seen that the electrode slurry of Example 3 exhibits more stable viscosity than that of Comparative Example 3, even as the shear rate changes.

Table 2 shows the viscosities "η_{0.10}" and "η₁₀₀" of the electrode slurries prepared in each of the Examples and Comparative Examples at shear rates of 0.10 s⁻¹ and 100 s⁻¹, respectively.

### <3. Negative Electrode>

### [3-1. Preparation of Negative Electrode]

The negative electrode slurry was applied to both sides of a 10 µm thick copper foil (negative electrode current collector) by the direct roll method. The amount of negative electrode slurry applied to the negative electrode current collector was adjusted so that the thickness after the roll press process described below would be 170 µm per side.

The negative electrode slurry applied to the negative electrode current collector was dried at 90°C for 10 minutes and pressed with a roll press machine (manufactured by Thank Metal, press load 8 t, roll width 7 cm) to obtain a negative electrode sheet in which a negative electrode active material layer was formed on the current collector. The obtained negative electrode sheet was cut into 52 mm × 42 mm, and a conductive tab was attached to prepare a negative electrode.

### [3-2. Various measurements of the negative electrode]

### [3-2-1. Measurement of peel strength of negative electrode active material layer]

A peel strength of the negative electrode active material layer with respect to the current collector was measured as follows. The negative electrode sheet after pressing in the negative electrode preparation process was cut to a size of 25 mm × 100 mm to prepare a test piece. The negative electrode active material layer on the test piece was attached to a SUS plate with a width of 50 mm and a length of 200 mm using double-sided tape (NITTOTAPE (registered trademark) No. 5, manufactured by Nitto Denko Corporation) so that a center of the test piece and a center of the SUS plate were aligned. The double-sided tape was attached so as to cover the entire area of the test piece.

After leaving the test piece and the SUS plate attached together for 10 minutes, the negative electrode active material layer was peeled off by 20 mm along the length direction from one end of the test piece, and the copper foil side of the test piece was folded back 180°, and this part (the copper foil side of the part of the test piece from which the negative electrode active material layer was peeled off) was held with the upper chuck of the testing machine. Furthermore, one end of the SUS plate from which the negative electrode active material layer was peeled was gripped with a lower chuck. Under this condition, the copper foil was peeled off from the test piece at a speed of 100±10 mm/min, and a graph of peel length (mm) versus peel force (mN) was obtained. In the obtained graph, an average peel force (mN) at peel lengths of from 10 mm to 45 mm was calculated, and the average peel force was divided by the width of the test piece, 25 mm, to obtain the peel strength (mN/mm) of the negative electrode active material layer. In all of the examples and comparative examples, peeling between the double-sided tape and the SUS plate, and interfacial peeling between the double-sided tape and the negative electrode active material layer did not occur during the test.

### [3-2-2. Measurement of resistance]

A resistance (mΩ·cm²) of the negative electrode active material layer and an interfacial resistance (mΩ·cm²) between the negative electrode active material layer and the current collector were measured using an electrode resistance measurement system XF057 manufactured by Hioki E.E. Corporation.

### <4. Lithium-ion secondary battery>

### [4-1. Production of battery]

Lithium-ion secondary batteries were produced using the negative electrode prepared in each of the examples and comparative examples. In the following explanation, the preparation of the negative electrode is as described above.

A positive electrode slurry was prepared by mixing 94 parts by mass of LiNi_{0.6}Mn_{0.2}Co_{0.2}O₂ as the positive electrode active material, 3 parts by mass of acetylene black as a conductive assistant and 3 parts by mass of polyvinylidene fluoride as a binder, followed by the addition of 50 parts by mass of N-methylpyrrolidone and further mixing.

The positive electrode slurry was applied to both sides of a 15 µm thick aluminum foil (positive electrode current collector) by the direct roll method. The amount of positive electrode slurry applied to the positive electrode current collector was adjusted so that the thickness after the roll press process described below would be 125 µm per side.

The positive electrode slurry applied to the positive electrode current collector was dried at 120°C for 5 minutes and pressed with a roll press machine (manufactured by Thank Metal, press load 5 t, roll width 7 cm) to obtain a positive electrode sheet in which a positive electrode active material layer was formed on the current collector. The obtained positive electrode sheet was cut to 50 mm × 40 mm, and a conductive tab was attached to prepare a positive electrode.

A separator made of a polyolefin-based porous film (made of polyethylene, 25 µm) was interposed between the positive electrode and the negative electrode, and the positive electrode active material layers and the negative electrode active material layers were placed to face each other. This assembly was housed in an aluminum laminate casing (battery pack). An electrolyte was injected into the casing, followed by vacuum impregnation. The assembly was then sealed using a vacuum heat sealer to produce a lithium-ion secondary battery for evaluation. The electrolyte was prepared by mixing 99 parts by mass of a solution in which LiPF₆ was dissolved at 1.0 mol/L in a mixed solvent of ethylene carbonate (EC)/ethyl methyl carbonate (EMC)/diethyl carbonate (DEC) = 30/50/20 (volume ratio) with 1 part by mass of vinylene carbonate.

### [4-2. Measurement of cycle capacity retention rate of battery]

A cycle capacity retention rate at high temperature of the batteries corresponding to each of the Examples and Comparative Examples was measured by repeating the following operation (i) to (iv) in this order under a condition of 45°C. Here, one series of operations (i) to (iv) is considered as one cycle.
(i) Charge at a current of 1C until the voltage reaches 4.2V (constant current (CC) charge).
(ii) Charge at a voltage of 4.2V until the current reaches 0.05C (constant voltage (CV) charge).
(iii) Leave to stand for 15 minutes.
(iv) Discharge at a current of 1C until the voltage reaches 2.75V (constant current (CC) discharge).

The time integral value of the current in operations (i) and (ii) is defined as the charge capacity, and the time integral value of the current in operation (iv) is defined as the discharge capacity. The discharge capacity at the first cycle and the discharge capacity at the 500th cycle were measured. The cycle capacity retention rate of the battery at high temperature was calculated as 100 × (discharge capacity at the 500th cycle) / (discharge capacity at the 1st cycle) [%]. The cycle capacity retention rate (500 cycles) of the batteries corresponding to each of the Examples and Comparative Examples is shown in Table 2.

### <5. Evaluation results>

All of the electrode slurries corresponding to Examples 1 to 4 contain a binder polymer (A), a cellulose derivative (B), an electrode active material (C), and a liquid medium (D). The binder polymer (A) in the electrode slurries of Examples 1 to 4 had a first structural unit derived from an aromatic ethylenically unsaturated compound (a1), which was a nonionic aromatic compound having one independent ethylenically unsaturated bond. The cellulose derivative (B) in the electrode slurries of Examples 1 to 4 had a degree of etherification of from 0.50 to 1.0, and a weight average molecular weight of from 100,000 to 700,000. Furthermore, all of the cellulose derivatives (B) were dissolved in the liquid medium (D).

The electrode slurries of Examples 1 to 4 suppress viscosity variation η₁₀₀/η_{0.10} with respect to changes in shear rate. The electrodes produced using the electrode slurries of Examples 1 to 4 have an electrode active material layer with high peel strength with respect to the current collector. The electrodes produced using the electrode slurries of Examples 1 to 4 also have low interfacial resistance between the electrode active material layer and the current collector, and low electrical resistance in the negative electrode active material layer, and the batteries equipped with these electrodes have low internal resistance.

In all of Comparative Examples 1 to 4, in which the molecular weight of the cellulose derivative (B) is high, the viscosity increases significantly when the shear rate is low. The electrodes produced using the electrode slurries of Comparative Examples 1 to 4 have low peel strength of the electrode active material layer with respect to the current collector. In addition, the electrodes produced using the electrode slurries according to Comparative Examples 1 to 4 have high interfacial resistance between the electrode active material layer and the current collector, and high electrical resistance in the negative electrode active material layer, and the batteries equipped with these electrodes have high internal resistance.

From the above, it can be seen that a non-aqueous secondary battery electrode slurry containing a binder polymer (A), a cellulose derivative (B), an electrode active material (C), and a liquid medium (D), in which the binder polymer (A) has a first structural unit derived from an aromatic ethylenically unsaturated compound (a1), which is a nonionic aromatic compound having one independent ethylenically unsaturated bond, the cellulose derivative (B) has a degree of etherification of from 0.50 to 1.2, and a weight average molecular weight of from 100,000 to 700,000, and the cellulose derivative (B) is dissolved in the liquid medium (D), suppresses viscosity variation with respect to changes in shear rate, enables the formation of an electrode active material layer having high peel strength with respect to a current collector, and allows for the production of a battery having low internal resistance.

Furthermore, the batteries equipped with electrodes produced using the electrode slurries of Examples 1 to 4 had a superior cycle capacity retention rate (500 cycles) compared to the batteries equipped with electrodes produced using the electrode slurries of Comparative Examples 1 to 4.

The present disclosure of Japanese Patent Application No. 2022-202794 is incorporated herein by reference in their entirety.

All documents, patent applications, and technical standards described in the present specification are incorporated herein by reference to the same extent as if each individual document, patent application, or technical standard were specifically and individually indicated to be incorporated by reference.

## Claims

1. A non-aqueous secondary battery electrode slurry comprising a binder polymer (A), a cellulose derivative (B), an electrode active material (C), and a liquid medium (D), wherein:
the binder polymer (A) has a first structural unit derived from an aromatic ethylenically unsaturated compound (a1) which is a nonionic aromatic compound having one independent ethylenically unsaturated bond,
the cellulose derivative (B) has a degree of etherification of from 0.50 to 1.2 and a weight average molecular weight of from 100,000 to 700,000, and
at least a portion of the cellulose derivative (B) is dissolved in the liquid medium (D).

2. The non-aqueous secondary battery electrode slurry according to claim 1, wherein a content of the first structural unit in the binder polymer (A) is from 25% by mass to 65% by mass.

3. The non-aqueous secondary battery electrode slurry according to claim 1, wherein the cellulose derivative (B) comprises at least one selected from the group consisting of carboxymethyl cellulose and salts thereof.

4. The non-aqueous secondary battery electrode slurry according to claim 1, wherein the binder polymer (A) further has a second structural unit derived from a nonionic (meth)acrylic acid ester (a2), and the nonionic (meth)acrylic acid ester (a2) is a nonionic aliphatic compound having one (meth)acryloyl group and has no ethylenically unsaturated bonds other than the (meth)acryloyl group.

5. The non-aqueous secondary battery electrode slurry according to claim 4, wherein a content of the first structural unit in the binder polymer (A) is from 25% by mass to 65% by mass, and a content of the second structural unit is from 25% by mass to 70% by mass.

6. The non-aqueous secondary battery electrode slurry according to claim 4, wherein the binder polymer (A) further has a third structural unit derived from an anionic unsaturated compound (a3), and the anionic unsaturated compound (a3) has an anionic functional group and one independent ethylenically unsaturated bond.

7. The non-aqueous secondary battery electrode slurry according to claim 6, wherein, in the binder polymer (A), a content of the first structural unit is from 25% by mass to 65% by mass, a content of the second structural unit is from 25% by mass to 70% by mass, and a content of the third structural unit is from 0.30% by mass to 15% by mass.

8. The non-aqueous secondary battery electrode slurry according to claim 6, wherein:
the binder polymer (A) further comprises a fifth structural unit derived from an internal crosslinking agent (a5) and a sixth structural unit derived from a surfactant (a6) having an ethylenically unsaturated bond,
the internal crosslinking agent (a5) comprises a plurality of independent ethylenically unsaturated bonds, and
the surfactant (a6) having an ethylenically unsaturated bond comprises one independent ethylenically unsaturated bond and is a compound that functions as a surfactant.

9. The non-aqueous secondary battery electrode slurry according to claim 8, wherein:
a content of the first structural unit in the binder polymer (A) is from 25% by mass to 65% by mass,
a content of the second structural unit is from 25% by mass to 70% by mass,
a content of the third structural unit is from 0.30% by mass to 15% by mass,
a content of the fifth structural unit is from 0.010% by mass to 1.0% by mass, and
a content of the sixth structural unit is from 0.10% by mass to 5.0% by mass.

10. The non-aqueous secondary battery electrode slurry according to claim 4, 6 or 8, wherein:
the binder polymer (A) further comprises a fourth structural unit derived from a conjugated diene compound (a4), and
the conjugated diene compound (a4) is a nonionic aliphatic compound that has one conjugated diene structure and that has no ethylenically unsaturated bonds other than the conjugated diene structure.

11. The non-aqueous secondary battery electrode slurry according to claim 10, wherein:
a content of the first structural unit in the binder polymer (A) is from 25% by mass to 65% by mass,
a content of the fourth structural unit is from 15% by mass to 55% by mass, and
a total content of the second structural unit and the fourth structural unit is from 25% by mass to 70% by mass.

12. The non-aqueous secondary battery electrode slurry according to claim 1, wherein:
a content of the binder polymer (A) with respect to 100 parts by mass of the electrode active material (C) is from 0.50 parts by mass to 6.0 parts by mass,
a content of the cellulose derivative (B) with respect to 100 parts by mass of the electrode active material (C) is from 0.50 parts by mass to 6.0 parts by mass, and
a content of the liquid medium (D) with respect to 100 parts by mass of the electrode active material (C) is from 50 parts by mass to 300 parts by mass.

13. A non-aqueous secondary battery electrode comprising a current collector and an electrode active material layer formed on or above the current collector, wherein:
the electrode active material layer comprises a binder polymer (A), a cellulose derivative (B) and an electrode active material (C),
the binder polymer (A) comprises a first structural unit derived from an aromatic ethylenically unsaturated compound (a1) which is a nonionic aromatic compound having one independent ethylenically unsaturated bond, and
the cellulose derivative (B) has a degree of etherification of from 0.50 to 1.2 and a weight average molecular weight of from 100,000 to 700,000.

14. A non-aqueous secondary battery electrode, comprising the non-aqueous secondary battery electrode according to claim 13.
